# EUROPÄISCHE PATENTANMELDUNG

(11) **EP 0 686 603 A1**
(43) Veröffentlichungstag der Anmeldung: **13.12.1995**
(21) Anmeldenummer: 94108565.6
(22) Anmeldetag: 03.06.1994
(51) Int. Cl.: C02F 1/465, C02F 1/24, B03D 1/14, B03D 1/02

(54) **Verfahren und Vorrichtung zur Abtrennung fester und flüssiger Stoffe aus Industrieabwässern durch Elektroflotation**

(71) Anmelder: Miljoevern Umwelt-Technik GmbH, D-45525 Hattingen (DE)
(72) Erfinder: Horst Schade Dipl. -Ing., 45525 Hattingen (DE); Peter Kimmer Dr., 04159 Leipzig (DE)
(74) Vertreter: Finkener und Ernesti Patentanwälte

(57) **Zusammenfassung**

Verfahren zur Abtrennung von Stoffen aus Industrieabwässern, bei dem das in einem Plattenreaktor befindliche Wasser in Längsrichtung durch die zwischen den Elektrodenplatten befindlichen Spalte gedrückt und nach Art eines Schlaufenreaktors umgewälzt wird und die Elektroflotation mit einer Entspannungsflotation überlagert wird. Das ablaufende Wasser wird in einem nachgeschalteten Kreuzstromabscheider geklärt. Ein Teil des Klarwassers wird im Kreislauf bei einem Druck von 2 bis 6 bar mit Luft übersättigt und zur Durchführung der Entspannungsflotation dem zu reinigenden Abwasser zugegeben und in die Zwischenräume zwischen den Platten eingeleitet.

Die Anlage zur Durchführung des Verfahrens besteht aus einem, als Schlaufenreaktor ausgebildeten Plattenreaktor (1) mit im Abstand und parallel zueinander angeordneten Platten (2) aus Eisen und Aluminium und einem nachgeschalteten Abscheider.

Eine in Längsrichtung verlaufende Wandung im Plattenreaktor verteilt den Verteilerraum (5) und den Raum, in dem die Platten angeordnet sind, in zwei Abteile mit einem gemeinsamen Umlenkraum (14). Im Verteilerraum ist ein U-Rohr (6) so angeordnet, daß jedes Abteil einen nach oben ragenden Schenkel enthält. In einem der Schenkel ist ein förderndes Rührwerk (8) angeordnet. Die Zufuhr des mit Gas gesättigten Klarwassers erfolgt über zwei in Querrichtung zu den Reaktorplatten verlaufenden Rohren (11,12), die am vorderen und hinteren Ende des Plattenpaketes in geringem Abstand unterhalb der Platten angeordnet sind. Diese Rohre sind mit in Längsrichtung schräg nach unten gerichteten Austrittsöffnungen versehen.

## Beschreibung

Die Erfindung betrifft ein Verfahren zur Abtrennung von festen und flüssigen Stoffen aus Flüssigkeiten, insbesondere aus verunreinigten Industrieabwässern durch Elektroflotation, bei der das zu reinigende Wasser in einem Plattenreaktor durch die Zwischenräume eines Paketes von im Abstand und parallel zueinander angeordneten Platten geleitet wird, die aus Eisen- oder Eisen- und Aluminiumplatten bestehen, wobei aus dem Plattenreaktor das Flotat getrennt von dem vorgeklärten Wasser und dem Sediment abgezogen und das vorgeklärte Wasser einer Nachreinigung unterworfen wird.

Aus der DE-OS 22 08 076 ist ein Verfahren zur elektrolytischen Behandlung von Industrieabwässern bekannt, bei dem das Abwasser als Elektrolyt in eine Elektrolysezelle eingespeist wird, die mit senkrecht stehenden Anoden und waagerecht nahe am Zellenboden angeordneten Kathoden ausgestattet ist und der bei der Elektrolyse gebildete und aufsteigende Schlamm aus dem oberen Teil der Elektrolysezelle ausgetragen wird, während die elektrolytisch gereinigte Flüssigkeit aus dem unteren Teil der Elektrolysezelle abgezogen wird.

Bei einem aus der DE-OS 23 13 640 bekannten Verfahren zur Behandlung von Wasser mit einem Gehalt an Metallionen, Ölen oder suspendierten Feststoffen ist vorgesehen, daß man zunächst das Wasser in einer ersten elektrolytischen Zelle elektrolysiert, die eine Anode aus Aluminium oder einer Aluminiumlegierung besitzt, während gleichzeitig Luft in das Wasser eingeblasen wird, um den Elektrolyten umzurühren. Die Metallionen, Öle oder suspendierten Feststoffe werden in wasserunlösliche Bestandteile umgesetzt. In einem zweiten Verfahrensschritt fügt man dem behandelten Wasser ein anionisches, wasserlösliches, hochmolekulares Material zu, wobei die Bestandteile Koagula bilden, die aufsteigen und auf der Wasseroberfläche schwimmen können. In einem dritten Verfahrensschritt wird das vorbehandelte Wasser in einer zweiten elektrolytischen Zelle elektrolysiert, die mit einer unlöslichen Anode ausgerüstet ist, wobei die Koagula aufsteigen und auf der Wasseroberfläche schwimmen, während man anschließend die Koagula von dem sauberen Wasser abtrennt.

Die bekannten Verfahren zur Elektroflotation von Schmutzwässern arbeiten im allgemeinen mit Gleichstromniederspannung, wobei die Elektroden entweder beständig bleiben oder durch Elektrolyse aufgelöst werden.

Aus der DE-PS 36 41 365 wird zur Durchführung eines Verfahrens zur Reinigung und Aufbereitung von Schmutzwässern mittels Elektroflotation unter Verwendung von durch Elektrolyse sich verbrauchenden Elektroden aus Eisen und Aluminium eine Vorrichtung benutzt, bei der in dem Elektrolysereaktor zwei Metallplatten-Pakete hintereinander angebracht sind, deren Platten jeweils als Anode und Kathode geschaltet sind, wobei die Platten in Kaskaden angeordnet sind und das erste Plattenpaket aus Eisen und das zweite Plattenpaket aus Aluminium besteht.

Ein als Entspannungsflotation bekanntes Reinigungssystem, das ebenfalls in der Abwassertechnik benutzt wird, ist in einem Aufsatz von H. Schade mit dem Titel "Optimierung von Flotationsanlagen durch Einsatz eines TPF-Abscheiders (Tiltable Plate Flotator) in der Abwassertechnik" beschrieben, der in der Zeitschrift "Korrespondenz Abwasser", 29. Jahrgang, Heft 9/1982, Seiten 629 bis 636, veröffentlicht ist.

Industrieabwässer, z. B. aus Färbereien, metallverarbeitenden Industrien, aus der Lederherstellung und Lederverarbeitung, enthalten Öle und Fette, Metallionen, suspendierte Feststoffe und dergleichen als gelöste oder ungelöste Verunreinigungen. Durch geeignete Chemikalien, z. B. Adsorbtionsmittel wird das Wasser gereinigt und über eine Entspannungs- oder Elektroflotation, Sedimentation oder Filtration von den Verunreinigungen getrennt. Es ist bekannt, diese Trennung unter Zuhilfenahme von Fällungs- und Flockungsmitteln zu unterstützen.

Der Erfindung liegt die Aufgabe zugrunde, die bekannten Elektroflotationsverfahren weiter zu entwickeln und insbesondere die Abtrennung von flüssigen und festen Stoffen aus verunreinigten Industrieabwässern zu verbessern.

Es hat sich überraschenderweise herausgestellt, daß eine Verbesserung der Elektroflotation dadurch möglich ist, daß sie durch eine Entspannungsflotation überlagert wird, so daß die Abtrennung der Stoffe mittels eines Elektro-/Entspannungsflotationsverfahren durchgeführt wird.

Ausgehend von einem Verfahren der eingangs beschriebenen Art besteht die Erfindung in der Kombination folgender Merkmale:
a) das in einem Plattenreaktor befindliche Wasser wird mittels eines Rührwerkes in Längsrichtung durch die zwischen den Platten befindlichen Spalte gedrückt und derart umgewälzt, daß es nach Art eines Schlaufenreaktors in wenigstens einem ersten Abteil des Plattenpaketes in entgegengesetzter Richtung strömt, wie in wenigstens einem anderen vom ersten Abteil abgetrennten Abteil des Paketes,
b) die Elektroflotation wird mit einer Entspannungsflotation überlagert, indem in jedem Abteil in die Zwischenräume zwischen den Platten im Bereich ihrer in Strömungsrichtung vorderen unteren Enden bei einem Druck von 2 bis 6 bar mit Luft gesättigtes Wasser eingeleitet wird,
c) das über einen Überlauf aus der Elektro-/Entspannungsflotation ablaufende vorgereinigte Wasser wird in einem nachgeschalteten Kreuzstromabscheider durch eine Fällungs-, Flockungs-, Sedimentations- und Flotationsstufe endgereinigt,
d) ein Teil des endgereinigten Klarwassers wird als Recyclingwasser abgezogen, bei einem Druck von 2 bis 6 bar mit Luft übersättigt und zur Durchführung der Entspannungsflotation dem zu reinigenden Abwasser zugegeben und in die Zwischenräume zwischen den Platten eingeleitet.

Bevorzugte Ausführungsformen der Erfindung sehen ferner vor,
- daß das mit Luft gesättigte Wasser, mit dem die Zwischenräume zwischen den Platten beaufschlagt werden, bezogen auf die Strömungsrichtung in jedem Abteil schräg nach unten eingeleitet wird,
- daß 20 bis 50 % des endgereinigten Klarwassers als Recyclingwasser abgezogen werden,
- daß an die Abscheideplatten ein Gleich- oder Impulsstrom mit einer Spannung von 1 bis 24 V angelegt wird,
- daß der Strom unter ständigem Polwechsel zugeführt wird,
- daß die Platten des Plattenpaketes senkrecht oder unter einem Winkel bis zu 45° geneigt in dem Reaktor angeordnet sind,
- daß die Umwälzleistung des Rührwerkes und/oder der in der Recyclingleitung angeordneten Pumpe zur Förderung des mit Luft gesättigten Wassers sowie die Strommenge und damit die Menge an Eisen und Aluminium die aufgelöst werden, stufenlos an die Belastung des Wassers mit abzutrennenden Stoffen angepaßt werden und
- daß das sich in dem Elektro-/Entspannungsflotationsreaktor ansammelnde Flotat abgesaugt und ebenso wie das Flotat, das aus dem Kreuzstromabscheider abgezogen wird, zusammen mit dem in dem Reaktor und dem Abscheider anfallenden Sediment einer Schlammentwässerung zugeführt wird.

Die Erfindung betrifft ferner eine Anlage zur Abtrennung von festen und flüssigen Stoffen aus Flüssigkeiten, insbesonderen aus verunreinigten Industrieabwässern durch eine Elektro-/Entspannungsflotation zur Durchführung des vorstehend beschriebenen Verfahrens, die aus einem Plattenreaktor mit im Abstand und parallel zueinander angeordneten Platten aus Eisen und Aluminium und einem nachgeschalteten Abscheider besteht.

Die Erfindung besteht darin, daß der Plattenreaktor als Schlaufenreaktor ausgebildet und eine in Längsrichtung der Platten verlaufende Wandung enthält, die von einer Stirnseite zu der mittleren Platte des Reaktors verläuft, so daß der Verteilerraum und der Raum, in dem die Platten angeordnet sind, in zwei Abteile mit einem gemeinsamen Umlenkraum unterteilt werden, daß in dem Verteilerraum ein U-Rohr so angeordnet ist, daß jedes Abteil einen nach oben ragenden Schenkel des U-Rohres enthält, wobei in einem der Schenkel ein förderndes Rührwerk angeordnet ist und daß die Zufuhr des mit Gas (Luft) gesättigten Klarwassers über zwei in Querrichtung zu den Reaktorplatten verlaufende Rohre erfolgt, die am vorderen und hinteren Ende des Plattenpaketes in geringem Abstand unterhalb der Platten angeordnet sind, wobei die Rohre in den Abschnitten, die - bezogen auf die Strömungsrichtung in den Abteilen - vorn liegen, mit in Längsrichtung schräg nach unten gerichteten Austrittsöffnungen versehen sind.

Bevorzugte Ausführungsformen der Erfindung sehen vor,
- daß die quer verlaufenden Rohre etwa 4 cm unterhalb der Enden der Plattenpakete angeordnet sind,
- daß zwischen den einzelnen Platten des Plattenpaketes an den quer verlaufenden Rohren befestigte Abstandhalter aus Kunststoff angeordnet sind,
- daß die Abstandhalter an den Rohren mittels einer Steck- oder Clipverbindung befestigt sind.
- daß die Platten des Plattenreaktors einerseits an Z-förmigen Halterungen, über die die Stromzufuhr erfolgt und auf der anderen Seite an einem isolierten Stahlprofil aufgehängt sind, wobei die Auflageschenkel vorzugsweise unterhalb der Wasseroberfläche liegen.
- daß die in Längsrichtung verlaufende Wandung mit Öffnungen versehen ist, deren Querschnitt veränderbar ist.
- daß die Stromzuführungen im Bereich eines oberen strömungsfreien Raumes des Plattenreaktors durch Abschirmungen geschützt sind.

Erfindungsgemäß ist der Abscheider ein Kreuzstromabscheider mit parallel und geneigt zueinander verlaufenden gewellten Platten, den das in dem Reaktor vorgereinigte Wasser über einen Verteilerraum gleichmäßig über den Querschnitt des Plattenpaketes verteilt durchströmt, wobei das Klarwasser über einen mit einem überlauf versehenen Abströmraum abgezogen wird.

Das in dem Plattenreaktor anfallende Flotat wird mittels einer Saugeinrichtung über ein Abzugsystem und das in dem Kreuzstromabscheider anfallende Flotat über einen Flotatabzug in eine Schlammleitung abgezogen. Die Schlammleitung ist über Leitungen mit unterhalb des Plattenpaketes des Plattenreaktors ausgebildeten komischen Räumen und über weitere Leitungen mit im unteren Teil des Kreuzstromabscheiders ausgebildeten konischen Räumen verbunden, in denen sich das Sediment sammelt, das zusammen mit dem Flotat über die Schlammleitung abgezogen wird.

Der Ablauf des Kreuzstromabscheiders steht erfindungsgemäß Ober eine Rückführleitung mit der Leitung in Verbindung, über die das zu reinigende Abwasser dem Elektro-/Entspannungsflotationsreaktor zugeführten wird; die Rückführleitung enthält eine Pumpe und/oder einen Anschluß an eine Druckgasleitung zur Sättigung des zurückgeführten Klarwassers mit Gas, vorzugsweise Luft, und einen Ausgleichbehälter, der über Entspannungsventile mit der im Querschnitt vergrößert ausgebildeten Zuführungsleitung verbunden ist.

Durch die überlagerung der Elektroflotation mit der Entspannungsflotation treten Effekte auf, die den Wirkungsgrad der Abtrennung von flüssigen und festen Stoffen qualitativ und quantitativ in nicht vorhersehbarer Weise erheblich verbessern. Sowohl der Gehalt an anorganischen Bestandteilen, z. B. an Schwermetallen, als auch an organischen Verunreinigungen, wie z. B. der CSB-Gehalt, können ohne Zusatz weiterer Fällungschemikalien wesentlich gesenkt werden. Die erfindungsgemäße Kombination der Fällung mit einer Oxidation durch Sauerstoff ermöglicht die Lösung schwieriger Probleme, z. B. die Behandlung von Abwässern mit Gehalten an Farbstoff, AOX und/oder Komplexbildnern. Darüber hinaus können die Anlagen bei Senkung der Investitionskosten kleiner ausgebildet werden als bisher.

Auf der Zeichnung ist ein Ausführungsbeispiel der Erfindung dargestellt. Es zeigen:

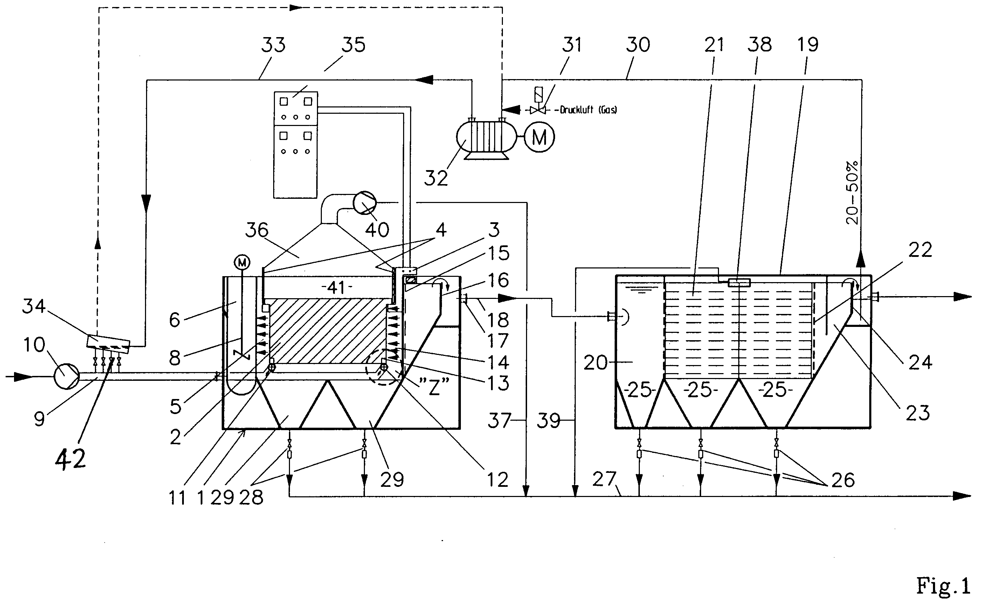

- Fig. 1: eine aus einem Reaktionsbehälter und einem diesem nachgeschalteten Kreuzstromabscheider bestehende Anlage zur Durchführung des Verfahrens,
- Fig. 2: eine Draufsicht auf den Reaktionsbehälter,
- Fig. 3: eine Einzelheit der Fig. 1 und
- Fig. 4: eine Vorderansicht der auf Fig. 3 dargestellten Einzelheit.

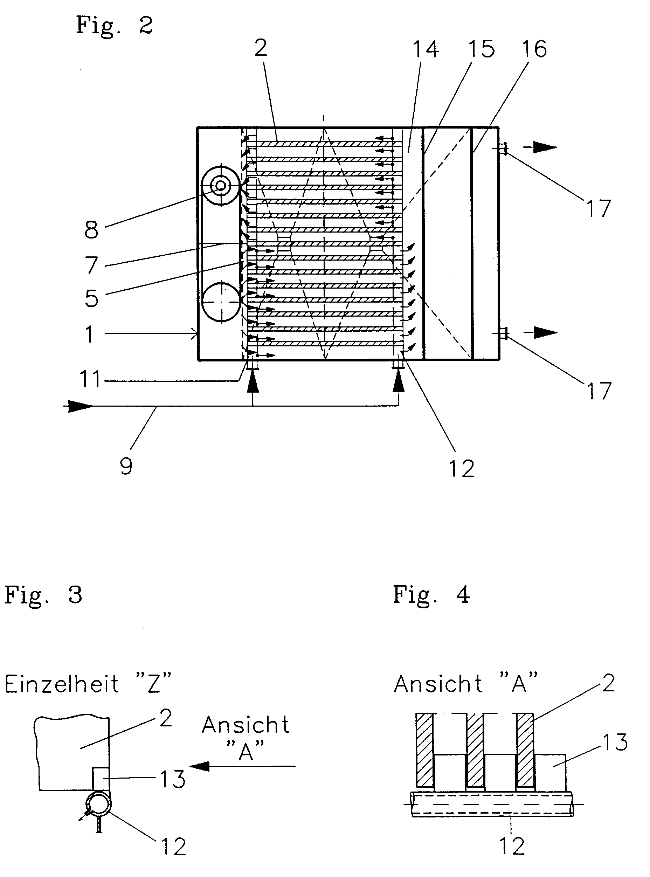

Die Elektro-/Entspannungsflotation wird in dem Reaktionsbehälter 1 durchgeführt, in dem bei der dargestellten Ausführungsform 15 Plattenelektroden 2 an einer Z-förmigen Halterung 3 aufgehängt sind. Auf der gegenüberliegenden Seite liegen die Plattenelektroden 2 auf einem isolierten Stahlprofil auf. Die einzelnen Z-förmigen Halterungen sind durch entsprechend geformte Teile aus isolierendem Material, vorzugsweise Polypropylen, voneinander isoliert. Die aus Eisen und Aluminium bestehenden Elektrodenplatten sind abwechselnd, z. B. indem auf zwei Eisenplatten eine Aluminiumplatte folgt, senkrecht und parallel zueinander in einem Abstand von einigen Zentimetern, beispielsweise 4 cm, angeordnet. Die Halterungen 3 dienen als Kontakte zur Stromzuführung; die Auflageschenkel für die einzelnen Platten befinden sich unterhalb der Flüssigkeitsoberfläche. Die Stromzuführungen werden durch Abschirmungen 4 vor Schaum und Kurzschluß geschützt. An dem vorderen, auf der Zeichnung linken Ende des Reaktors befindet sich vor den Abscheideplatten 2 ein Verteilerraum 5, in dem ein U-Rohr 6 angeordnet ist, dessen Schenkel nach oben ragen und mit schlitzartigen Öffnungen versehen sind. In einem der U-förmigen Schenkel ist ein förderndes Rührwerk 8 angeordnet. Der Verteilerraum 5 ist durch eine an die mittlere Platte des Plattenpaketes anschließende Wandung 7 (Fig. 2) in zwei Abteile unterteilt, die jeweils einen Schenkel des U-Rohres enthalten. Die Wandung 7 ist vorteilhafterweise mit Öffnungen versehen, deren Querschnitt veränderbar ist.

Das Abwasser wird über eine Zuführungsleitung 9 zugeführt, die mit einer Pumpe 10 versehen ist und die hinter der Pumpe einen vergrößerten Querschnitt hat. Die Leitung mündet in zwei Rohre 11 und 12, die quer zur Längsrichtung der Platten am unteren vorderen und am unteren hinteren Ende des Plattenpaketes in geringem senkrechten Abstand von den unteren Kanten der Platten 2 angeordnet sind (Fig. 4). Mit 13 sind Abstandhalter bezeichnet, die zwischen den Platten sitzen und vorzugsweise auf die Rohre 11 und 12 aufgeklipst sind. Die Rohre selbst sind mit schräg nach unten gerichteten Öffnungen versehen (Fig. 3). Wie sich aus Fig. 2 ergibt sind die Öffnungen in den quer verlaufenden Rohren 11 und 12 jeweils in dem Rohrabschnitt angebracht, der in dem durch die Wandung 7 abgetrennten Abteil in Strömungsrichtung vorderen Ende des Plattenpaketes liegt. Im Bereich der auf Fig. 2 unteren sieben Platten befinden sich die Öffnungen im unteren Abschnitt des Rohres 11, in dem oberen Abteil im oberen Abschnitt des Rohres 12. Dies ist durch die geraden Pfeile in den Zwischenräumen zwischen den einzelnen Platten angedeutet.

Die gekrümmten Pfeile kennzeichnen die Strömungsrichtung im Verteilerraum 5 und einem Umlenkraum 14 am anderen Ende des Plattenpaketes.

Die Vorrichtung arbeitet wie folgt.

Das zu reinigende Abwasser wird durch die Leitung 9 mittels der Pumpe 10 zugeführt und gelangt über die an die Zuführungsleitung angeschlossenen Rohre 11 und 12 in jeweils eins der Abteile des Reaktors. Wenn der Reaktor gefüllt ist wird das Rührwerk 8 eingeschaltet, das in einem der Schenkel des U-Rohres angeordnet ist und eine Strömung erzeugt, die das Wasser in den anderen Schenkel des Rohres fördert. Aus dessen Schlitzen tritt das Wasser in einen der Räume (in Fig. 2 in den unteren Raum) des durch die Wandung 7 unterteilten Verteilerraumes 5 und durchströmt die Zwischenräume zwischen den Platten des auf Fig. 2 unteren Abteils. Am anderen Ende der Platten ist der Umlenkraum 14 vorgesehen, in dem die Strömungsrichtung umgekehrt wird, so daß das Wasser in entgegengesetzter Richtung durch die Zwischenräume zwischen den Platten des anderen auf Fig. 2 oberen Abteils zurückströmt und in den Schenkel des U-Rohres eintritt, in dem sich das Rührwerk 8 befindet. Auf diese Weise wird eine ständige Strömung nach Art eines Schlaufenreaktors aufrechterhalten. Gleichzeitig wird über den Gleichrichter 35 ein Gleichstrom eingeschaltet. Oberhalb des Plattenpaketes befindet sich ein annähernd "horizontal" strömungsfreier Raum 41, so daß die Leichtstoffe aufsteigen und nicht wieder durch die Horizontalströmung des Schlaufenreaktors angesaugt werden können. Vorgeklärtes Abwasser tritt durch in der Wandung 15 des Umlenkraumes 14 vorgesehene Öffnungen, fließt über einen überlauf 16 durch die Ablaufstutzen 17 ab und wird durch die Leitung 18 in einen Kreuzstromabscheider 19 überführt.

Der Kreuzstromabscheider 19 enthält in bekannter Weise einen Verteilerraum 20, aus dem das aus dem Reaktor 1 zulaufende vorgeklärte Wasser auf das aus gewellten Platten bestehende Plattenpaket 21 verteilt wird, das es in Längsrichtung durchströmt. Das Klarwasser tritt durch eine mit Öffnungen versehene Trennwand 22 in den Abströmraum 23 und fließt über einen überlauf 24 ab, während sich das Sediment in unterhalb des Plattenpaketes und des Verteilerraumes 20 vorgesehenen konischen Räumen 25 sammelt und über mit Ventilen versehene Leitungen 26 durch die Schlammleitung 27 zur Schlammentwässerung geleitet wird. In die Schlammleitung 27 münden auch mit Ventilen versehene Leitungen 28, die unterhalb des Plattenpaketes 2 und des Raumes 5 des Reaktors 1 vorgesehene konusförmige Räume 29 mit der Schlammleitung verbinden.

Das sich hinter dem überlauf 24 des Kreuzstromabscheiders sammelnde Klarwasser wird teilweise, vorzugsweise in einer Menge von 20 bis 50 %, über eine Rückführleitung 30 in die Zuführungsleitung 9 zum Reaktor 1 zurückgeführt. Erfindungsgemäß wird das Klarwasser nach Zugabe von Druckgas bzw. selbstansaugend, vorzugsweise über die Leitung 31, mit Gas (Luft) übersättigt und mit einer Pumpe 32 durch die Leitung 33 in einen Ausgleichbehälter 34 gefördert, der über mit Entspannungsventilen 42 versehene Leitungen in Strömungsrichtung hinter der Pumpe 10 mit der vergrößert ausgebildeten Zuführungsleitung 9 verbunden ist. Der Ausgleichbehälter steht zur Ableitung von überschüssigem Gas (Luft) mit der Rückführleitung 30 in Verbindung. Die Entspannung des mit Gas (Luft) übersättigten Klarwassers in die Zuführungsleitung 9 stellt die erfindungsgemäße Elektro-/Entspannungsflotation in dem Reaktor 1 sicher.

Der Gleichrichter 35 ist ein luftgekühlter, getakteter Gleichrichter mit einer Steuerung für die Stromzufuhr, der auch eine Umpolung ermöglicht.

Das sich in dem Elektro-/Entspannungsflotationsreaktor ansammelnde Flotat wird mittels einer Saugeinrichtung 40 über die Absaughaube 36 und die Leitung 37 in die zur Schlammentwässerung führende Leitung 27 überführt. Der Kreuzstromabscheider 19 ist mit einem Flotatabzug 38 versehen, der über die Leitung 39 ebenfalls mit der Leitung 27 verbunden ist.

## Patentansprüche

1. Verfahren zur Abtrennung von Stoffen aus Flüssigkeiten, insbesondere aus verunreinigten Industrieabwässern, durch Elektroflotation, bei der das zu reinigende Wasser in einem Plattenreaktor durch die Zwischenräume eines Paketes von im Abstand und parallel zueinander angeordneten Platten geleitet wird, die aus Eisen- oder Eisen- und Aluminiumplatten bestehen, wobei aus dem Plattenreaktor das Flotat getrennt von dem vorgeklärten Wasser und dem Sediment abgezogen und das vorgeklärte Wasser einer Nachreinigung unterworfen wird, gekennzeichnet durch die Kombination der folgenden Merkmale:
a) das in einem Plattenreaktor befindliche Wasser wird mittels eines Rührwerkes in Längsrichtung durch die zwischen den Platten befindlichen Spalte gedrückt und derart umgewälzt, daß es nach Art eines Schlaufenreaktors in wenigstens einem ersten Abteil des Plattenpaketes in entgegengesetzter Richtung strömt, wie in wenigstens einem anderen vom ersten Abteil abgetrennten Abteil des Paketes,
b) die Elektroflotation wird mit einer Entspannungsflotation überlagert, indem in jedem Abteil in die Zwischenräume zwischen den Platten im Bereich ihrer in Strömungsrichtung vorderen unteren Enden bei einem Druck von 2 bis 6 bar mit Luft gesättigtes Wasser eingeleitet wird,
c) das über einen überlauf aus der Elektro-/Entspannungsflotation ablaufende vorgereinigte Wasser wird in einem nachgeschalteten Kreuzstromabscheider durch eine Klärstufe endgereinigt,
d) ein Teil des endgereinigten Klarwassers wird als Recyclingwasser abgezogen, bei einem Druck von 2 bis 6 bar mit Luft übersättigt und zur Durchführung der Entspannungsflotation dem zu reinigenden Abwasser zugegeben und in die Zwischenräume zwischen den Platten eingeleitet.

2. Verfahren nach Anspruch 1, dadurch gekennzeichnet, daß das mit Luft gesättigte Wasser, mit dem die Zwischenräume zwischen den Platten beaufschlagt werden, bezogen auf die Strömungsrichtung in jedem Abteil schräg nach unten eingeleitet wird.

3. Verfahren nach den Ansprüchen 1 und 2, dadurch gekennzeichnet, daß 20 bis 50 % des endgereinigten Klarwassers als Recyclingwasser abgezogen werden.

4. Verfahren nach einem der vorhergehenden Ansprüche, dadurch gekennzeichnet, daß an die Abscheideplatten ein Gleich- oder Impulsstrom mit einer Spannung von 1 bis 24 V angelegt wird.

5. Verfahren nach Anspruch 4, dadurch gekennzeichnet, daß der Strom unter ständigem Polwechsel zugeführt wird.

6. Verfahren nach einem der vorhergehenden Ansprüche, dadurch gekennzeichnet, daß die Platten des Plattenpaketes senkrecht oder unter einem Winkel bis zu 45° geneigt in dem Reaktor angeordnet sind.

7. Verfahren nach einem der vorhergehenden Ansprüche, dadurch gekennzeichnet, daß die Umwälzleistung des Rührwerkes und/oder der in der Recyclingleitung angeordneten Pumpe zur Förderung des mit Luft gesättigten Wassers sowie die Strommenge und damit die Menge an Eisen und Aluminium die aufgelöst werden, stufenlos an die Belastung des Wassers mit abzutrennenden Stoffen angepaßt werden.

8. Verfahren nach einem der vorhergehenden Ansprüche, dadurch gekennzeichnet, daß das sich in dem Elektro-/Entspannungsflotationsreaktor ansammelnde Flotat abgesaugt und ebenso wie das Flotat, das aus dem Kreuzstromabscheider abgezogen wird, zusammen mit dem in dem Reaktor und dem Abscheider anfallenden Sediment einer Schlammentwässerung zugeführt wird.

9. Vorrichtung zur Abtrennung von Stoffen aus Flüssigkeiten, insbesondere aus verunreinigten Industrieabwässern, durch eine Elektro-/Entspannungsflotation gemäß den Patentansprüchen 1 bis 8, bestehend aus einem Plattenreaktor (1) mit im Abstand und parallel zueinander angeordneten Platten (2) aus Eisen und Aluminium und einem nachgeschalteten Abscheider (19), dadurch gekennzeichnet, daß der Plattenreaktor (1) als Schlaufenreaktor ausgebildet und eine in Längsrichtung der Platten (2) verlaufende Wandung (7) enthält, die von einer Stirnseite zu der mittleren Platte des Reaktors verläuft, so daß der Verteilerraum (5) und der Raum, in dem die Platten angeordnet sind, in zwei Abteile mit einem gemeinsamen Umlenkraum (14) unterteilt werden, daß in dem Verteilerraum ein U-Rohr (6) so angeordnet ist, daß jedes Abteil einen nach oben ragenden Schenkel des U-Rohres enthält, wobei in einem der Schenkel ein förderndes Rührwerk (8) angeordnet ist und daß die Zufuhr des mit Gas (Luft) gesättigten Klarwassers über zwei in Querrichtung zu den Reaktorplatten (2) verlaufende Rohre (11, 12) erfolgt, die am vorderen und hinteren Ende des Plattenpaketes in geringem Abstand unterhalb der Platten angeordnet sind, wobei die Rohre (11, 12) in den Abschnitten, die - bezogen auf die Strömungsrichtung in den Abteilen - vorn liegen, mit in Längsrichtung schräg nach unten gerichteten Austrittsöffnungen versehen sind.

10. Vorrichtung nach Anspruch 9, dadurch gekennzeichnet, daß die quer verlaufenden Rohre etwa 4 cm unterhalb der Enden der Plattenpakete angeordnet sind.

11. Vorrichtung nach den Ansprüchen 9 und 10, dadurch gekennzeichnet, daß zwischen den einzelnen Platten des Plattenpaketes an den quer verlaufenden Rohren (11, 12) befestigte Abstandhalter (13) aus Kunststoff angeordnet sind.

12. Vorrichtung nach Anspruch 11, dadurch gekennzeichnet, daß die Abstandhalter (13) an den Rohren mittels einer Steck- oder Clipverbindung befestigt sind.

13. Vorrichtung nach einem der Ansprüche 9 bis 12, dadurch gekennzeichnet, daß die Platten (2) des Plattenreaktors (1) einerseits an Z-förmigen Halterungen (3), über die die Stromzufuhr erfolgt und auf der anderen Seite an einem isolierten Stahlprofil aufgehängt sind, wobei die Auflageschenkel vorzugsweise unterhalb der Wasseroberfläche liegen.

14. Vorrichtung nach einem der Ansprüche 9 bis 13, dadurch gekennzeichnet, daß die Wandung (7) mit Öffnungen versehen ist, deren Querschnitt veränderbar ist.

15. Vorrichtung nach einem der Ansprüche 9 bis 14, dadurch gekennzeichnet, daß die Stromzuführungen im Bereich eines oberen strömungsfreien Raumes (41) des Plattenreaktors durch Abschirmungen (4) geschützt sind.

16. Vorrichtung nach einem der Ansprüche 9 bis 15, dadurch gekennzeichnet, daß der Abscheider ein Kreuzstromabscheider (19) mit parallel und geneigt zueinander verlaufenden gewellten Platten (21) ist, daß das in dem Reaktor (1) vorgereinigte Wasser über einen Verteilerraum (20) gleichmäßig über den Querschnitt des Plattenpaketes verteilt zugeführt wird und daß das Klarwasser über einen mit einem überlauf (24) versehenen Abströmraum (23) abgezogen wird.

17. Vorrichtung nach einem der Ansprüche 9 bis 16, dadurch gekennzeichnet, daß das in dem Plattenreaktor (1) anfallende Flotat mittels einer Saugeinrichtung (40) über ein Abzugsystem und das in dem Kreuzstromabscheider (19) anfallende Flotat über einen Flotatabzug (38) in eine Schlammleitung (27) abgezogen werden, die über Leitungen (28, 29) mit unterhalb des Plattenpaketes des Plattenreaktors ausgebildeten konischen Räumen (29) und über Leitungen (26) mit im unteren Teil des Kreuzstromabscheiders ausgebildeten konischen Räumen (25) in Verbindung steht, in denen sich das Sediment sammelt.

18. Vorrichtung nach einem der Ansprüche 9 bis 17, dadurch gekennzeichnet, daß der Ablauf des Kreuzstromabscheiders (19) über eine Rückführleitung (30, 33) mit der Zuführungsleitung (9) in Verbindung steht und daß die Rückführleitung eine Pumpe (32) und/oder einen Anschluß an eine Druckgasleitung (31) zur Sättigung des zurückgeführten Klarwassers mit Gas, vorzugsweise Luft, und einen Ausgleichbehälter (34) enthält, der über Entspannungsventile (42) mit der im Querschnitt vergrößert ausgebildeten Zuführungsleitung (9) verbunden ist.
